# EUROPEAN PATENT SPECIFICATION

(11) **EP 3 907 419 B1**
(45) Date of publication and mention of the grant of the patent: **26.07.2023**
(21) Application number: 19907698.5
(22) Date of filing: 17.12.2019
(51) Int. Cl.: F16F 9/348, F16F 9/512, F16F 9/06, B60G 13/08, F16F 9/18

(54) **SHOCK ABSORBER WITH HYDRAULIC LOAD REGULATION ACCORDING TO SPEED AND FREQUENCY SIMULTANEOUSLY**
STOSSDÄMPFER MIT GLEICHZEITIGER HYDRAULISCHER LASTREGELUNG NACH GESCHWINDIGKEIT UND FREQUENZ
AMORTISSEUR À RÉGULATION DE CHARGE HYDRAULIQUE SIMULTANÉMENT EN FONCTION DE LA VITESSE ET DE LA FRÉQUENCE

(30) Priority: 04.01.2019 ES 201930008
(43) Date of publication of application: 10.11.2021
(73) Proprietor: KYB Europe GmbH, Sucursal en Navarra, 31171 Ororbia (Navarra) (ES)
(72) Inventor: LIZARRAGA SENAR, Javier, 31171 Ororbia (Navarra) (ES)
(74) Representative: Ungria López, Javier
(86) International application number: PCT/ES2019/070854
(87) International publication number: WO 2020/141238

(56) References cited:
- WO-A1-2017/112978
- WO-A1-2017/112978
- US-A- 5 018 608
- US-A1- 2015 276 005
- US-A1- 2018 187 738
- US-A1- 2018 187 738

## Description

### OBJECT OF THE INVENTION

The present invention relates to a shock absorber capable of regulating the load generated by a speed and frequency-dependent hydraulic device to which it is subjected simultaneously, both for compression and extension movements.

The present invention is particularly applicable in the field of the industry relating to shock absorbers which use a fluid as damping agent, focusing particularly on the automotive industry.

### TECHNICAL PROBLEM TO BE RESOLVED AND BACKGROUND OF THE

### INVENTION

A shock absorber is a device intended for attenuating the oscillations of the suspension by means of dissipating kinetic energy until said suspension recovers the equilibrium position thereof. A very common case of development focuses on the application on automobiles.

Focusing on the automotive sector, the shock absorber has a decisive impact on both stability and comfort. In fact, the adjustment of the hydraulic load that it generates represents a compromise between both factors:
- in terms of stability, dynamic control of the vehicle is performed at low extension and compression speeds of the suspension and low oscillation frequencies, corresponding to the natural frequency of the sprung mass (cabin), which is typically in the range of 1-2 Hz for passenger cars. In this operating regimen, a high level of damping, i.e., high hydraulic loads, is required;
- in terms of comfort, control is mainly related to medium and high extension and compression speeds of the suspension which occur at medium or high oscillation frequencies. The reference frequency is the natural frequency of the unsprung mass (wheel/suspension), which is typically in the range of 8-15 Hz for passenger cars. A higher degree of comfort is subject to a reduced level of damping, which allows uncoupling the movement of the wheels from the oscillations of the chassis.

Therefore, it is desirable for the shock absorber to be able to adjust the load level thereof to the characteristics of the oscillations it must attenuate.

Therefore, on one hand, the shock absorber must be able to adapt itself depending on the oscillation speed of the suspension. In the state of the art, the internal configuration of the shock absorber and the valves thereof is conceived to generate a higher damping coefficient for low speeds than for medium and high speeds. The function linking the load of a shock absorber with the oscillation speed thereof is the main characteristic of the same and the curve that is acted on for optimising the compromise between stability and comfort.

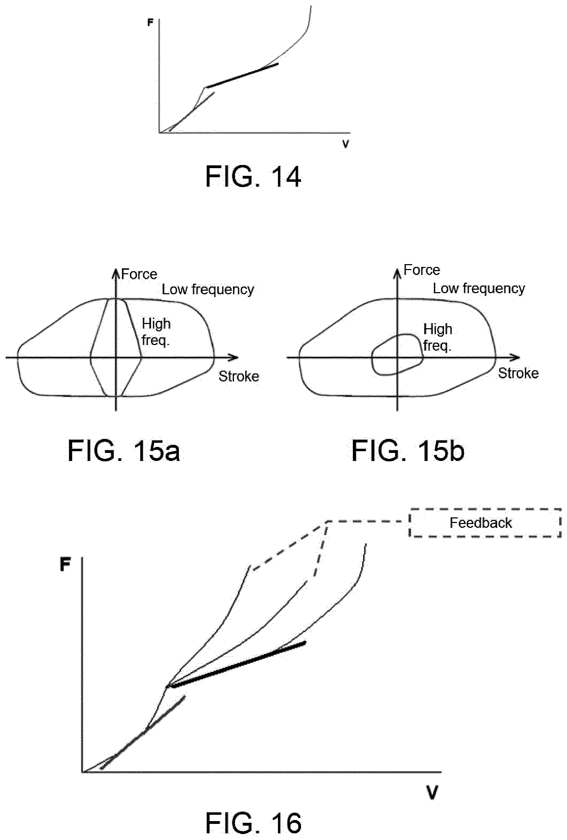

Figure 14 refers to a graph depicting the damping force depending on the oscillation speed of a shock absorber. The slope indicates the damping coefficient. The more inclined the slope is, the higher the damping coefficient. Therefore, the damping coefficient, i.e., the slope of the curve, is greater at low speeds than at medium and high speeds.

On the other hand, the shock absorber must be able to adapt itself depending on the oscillation frequency of the suspension. The graphs of Figures 15a and 15b depict the variation of the damping force depending on the stroke of the piston without the incorporation of any frequency adjustment device and with the incorporation of a frequency adjustment device, respectively, where it can be verified that, although there is no variation at a low frequency, at a high frequency, for one same stroke length, the force decreases when a frequency adjustment device is used, i.e., the damping level is reduced considerably, thereby obtaining a softer suspension, which entails an increase in comfort.

The conventional shock absorber is not capable of adapting its response to the oscillation frequency. In the state of the art, there are solutions which incorporate this characteristic into the shock absorber as indicated above. A first type consists of adding to the main piston of the shock absorber a valve arranged in parallel which allows the passage of fluid after a certain oscillation frequency.

One of these devices is described in document US7395907. The object of this document is a hydraulic shock absorber to which there is installed at the end of the pin of the rod an auxiliary device responsible for regulating the frequency-dependent damping load.

However, this invention presents a series of problems or limitations.

First, it only performs frequency regulation of the damping generated in the extension stroke.

Second, since it is a device added to the end of the pin of the rod, it takes up additional space axially, making it necessary to reduce the maximum stroke of the shock absorber or making the implementation thereof in some suspensions unviable due to the lack of space. The reduction of the stroke of the shock absorber entails a decrease in comfort, as the end of stroke of the suspension is reached more often.

Third, the parallel installation of the frequency valve requires drilling a hole of considerable dimensions on the pin of the rod so that the system remains efficient at medium speed, where the flow rates to be exchanged are important. This reduces the strength of the pin, limiting the hydraulic and mechanical stress it can withstand.

Fourth, to reach a good compromise between the passage section of the hole and the strength of the pin of the rod, the frequency effect is limited for high speed movements.

Fifth, the frequency control chamber is connected with the traction chamber of the shock absorber located above the piston by means of a small passage that is essentially symmetrical in both directions of fluid circulation. The operating principle of the invention is based on said conduit imposing a strong restriction on the access of the fluid to the frequency chamber, such that the associated delay allows frequency regulation to be performed. This delay is likewise present in the fluid returning from the frequency chamber to the traction chamber, a flow that is essential to restore the initial position of the system after a low-frequency operation. High-frequency damping regulation is therefore limited by the time required for the invention to return to its initial position, something which is particularly serious in a frequency regulator. Furthermore, the combination of pressures of the traction and compression chambers during the extension movement of the shock absorber favours the filling of the frequency chamber, but not the emptying of the same, neither during the extension movement nor during the compression movement.

When the shock absorber works at low frequencies, the frequency chamber is filled and must be emptied later on so that it is available as soon as possible. The problem lies in the fact that the system delay described in this document does not allow the fluid to quickly return to the traction chamber, which conditions the response of the shock absorber if it is subjected to high frequency thereafter.

Document US9534653 describes a shock absorber with a piston capable of improving comfort in travel situations by acting in both a high-frequency situation and a low-frequency situation of the shock absorber. To that end, the pin of the rod incorporates a longitudinal bypass channel, formed by means of two planar recesses made in the pin of the rod. The piston has a frequency chamber which is in turn split into two sub-chambers, which are connected with respective holes made in a bushing installed in the pin of the rod, said frequency chamber being responsible for regulating the frequency-dependent shock absorber.

Document US9534653 partially solves some of the problems of US7395907 in the manner indicated below.

On one hand, the hole of the pin of the rod is eliminated, replacing it with planar faces which entail improved reduction in the mechanical strength of the pin.

On the other hand, it requires less axial space within the shock absorber, allowing longer strokes of the suspension.

However, a series of points remains unsolved. For example, like the preceding document, it only performs frequency regulation of the damping generated in the extension stroke, without the implementation thereof in the compression stroke being possible.

Furthermore, the reduction of high-frequency damping is still based on discharging fluid through a passage which works parallel with that of the main valve which regulates low-frequency damping. The available passage section is still very limited, which considerably reduces the frequency effect for medium and high speeds.

The return of the system to the initial position thereof is slow given the difficulty in filling the upper frequency sub-chamber and emptying the lower one after a low-frequency operation. Again, the pressure difference between the frequency and traction sub-chambers is favourable for regulation of the shock absorber during extension movements, but unfavourable to allow the system to recover the standby position. All this again limits its regulatory effect at high frequencies.

Document WO/2017/112978, considered as the closest prior art, describes a shock absorber having a frequency chamber acting directly against the main valve of the piston, thereby regulating the frequency-dependent damping load. In this document, the outflow flow parallel to the main valve of the shock absorber, as a frequency-dependent damping regulator element described in the preceding documents, is eliminated. This therefore solves the following problems present in said documents:
- It is capable of performing frequency regulation of the damping generated in both the extension stroke and the compression stroke
- The elimination of the parallel fluid flow, as a regulator element, minimises the associated problems for maintaining the frequency effect at high speeds, given that the conduits and the main valve of the piston with a significant greater passage section are used.

However, the shock absorber described in document WO/2017/112978 still presents some of the previous problems and even adds other additional problems such as:
- The return of the system to the standby position thereof is still as expensive as in the other documents, because the frequency chamber is still connected to the traction chamber by means of a narrow passage which delays the filling thereof, to thereby enable activating frequency regulation. Therefore, everything in this regard which is considered problematic in the preceding documents is still applicable and limits the capacity of the system to perform regulation at high working frequencies. The shock absorber described in WO/2017/112978 proposes an improvement based on a check valve, but the application of which entails high costs due to its complexity, dimension, and intricate geometry, as well as serious dispersion problems in the obtained frequency behaviour.
- A significant problem added to the shock absorber described in WO/2017/112978 lies in the fact that the pressure of the frequency chamber is applied directly and without any limit to the main valve of the piston, increasing the restriction to the passage of fluid the latter imposes. This in turn increases the pressure in the frequency chamber, thereby configuring a feedback system. This jeopardises the mechanical strength of some components of the invention and of the shock absorber for high-speed and/or amplitude movements. Furthermore, it greatly limits the correct distribution of speed-dependent damping, making it impossible to have high damping coefficients at a low speed and low damping coefficients at a high speed. Figure 16 shows how shock absorber regulation varies due to feedback. Since force is applied directly to the main valve, a restriction is being imposed on the shock absorber operation, which affects the medium and high speeds, where the lowest possible damping force, and therefore restriction, is of interest for improving comfort and obtaining a soft suspension. This does not occur in the preceding systems because the speed-dependent damping characteristic for low frequency is completely independent from the speed-dependent damping characteristic for high frequency, since the devices are uncoupled devices. Therefore, although it causes an improved comfort depending on frequency, it causes a reduced comfort depending on speed. In other words, the shock absorber described in WO/2017/112978 is adjusted depending on frequency but at the expense of degrading the speed-dependent adjustment.
- Finally, the document considers complete coupling between the main valve of the shock absorber and the feedback of the frequency system, which are based on a single frequency valve. Therefore, the pressure generated in the frequency chamber is applied directly to the main valve, without any gap whatsoever between the components, thereby decreasing the damping reduction potential, particularly for medium frequencies, but also for high frequencies.

Document WO2017112978A1 discloses a frequency dependent piston assembly for a shock absorber comprising: a piston disposed within a cylinder and dividing the volume enclosed into a first chamber and a second chamber. The piston comprises a first flow channel that connects the first chamber with the second chamber. The piston assembly further comprises a first fluid accumulator and a first fluid channel that connects the first fluid accumulator with the side of the piston that is located closest to the first accumulator. A first valve assembly controls the passage of fluid from the first chamber to the second chamber and is configured in such a way that its preload force is controlled by the first fluid accumulator.

Document US 2018/187738 A1, which is considered to be the closest prior art, discloses a shock absorber according to the pre-amble of claim 1.

The present invention solves these limitations by furthermore allowing damping load regulation taking into account frequency and speed by means of the capacity of the frequency amplifier to empty quickly, which allows leaving the shock absorber ready to receive a high-frequency movement after a low-frequency movement, as well as the limitation of pressure of the frequency amplifier, which is achieved by means of using two independent valves, one primary valve and another secondary valve, in addition to pressure control valves in the frequency amplifier, consisting of a pressure regulating valve.

### DESCRIPTION OF THE INVENTION

To achieve the objectives and prevent the aforementioned drawbacks, the present invention describes a shock absorber with simultaneous speed and frequency-dependent hydraulic load regulation as set out in the appended set of claims. The shock absorber, in addition to a pin of the rod comprising a longitudinal channel with the function that will be described below, incorporates a guide bushing, a primary valve, a secondary valve, an elastic element, and a frequency amplifier which comprises, among the main elements, a casing, a floating piston, and a pressure control valve.

The casing is fixed surrounding the pin of the rod and has a cylindrical configuration formed by means of a base and a wall concentric with the pin of the rod.

The guide bushing is also fixed surrounding the pin of the rod, overlapping part of the longitudinal channel and leaving one end free through which a fluid, located on the other side of the piston, can directly access, through a through hole of the piston, the longitudinal channel along the inside of the guide bushing. The guide bushing is also attached to the casing at the other end, allowing, either by means of a narrow conduit created by a notched configuration of the end of the guide bushing or by means of a relief disc located at the end of the guide bushing, a fluid to access the outside of the guide bushing from the longitudinal channel so as to reach the inside of the volume formed by the casing.

The elastic element surrounds the guide bushing. For the sake of versatility, it is preferably an assembly of Belleville washers, which can be configured in terms of elasticity, outer diameter, and number, allowing a broad definition when configuring stresses in the system.

The primary valve is positioned in contact with the piston, preferably through a relief disc. The secondary valve is in turn located between two spacers, one separating it from the primary valve and another spacing it apart from the elastic element. The spacer can be, for example, a washer.

To allow the bending of the primary valve when it is pressed by the secondary valve, the outer diameter of the secondary valve is smaller than the outer diameter of the primary valve.

The assembly formed by the primary valve, the secondary valve, the relief disc, and the spacers can be arranged in two positions. One of them surrounds the guide bushing and is located between the piston and the elastic element. The other is embedded between the piston and the guide bushing.

Finally, the floating piston is located in the volume formed by the casing. It is capable of sliding between the guide bushing and the wall of the casing, maintaining leaktightness during sliding, for which it uses a pair of sealing elements such as, for example, O-rings, one for the inner diameter and another for the outer diameter.

The floating piston has a stepped base which, together with the guide bushing and the casing, configures an amplifier chamber which, as the pressure increases due to the entry of fluid, increases in volume as the floating piston is pushed to slide along the guide bushing. The other side of the floating piston is in contact with the elastic element, which presses against the base of the casing.

The floating piston may comprise an outflow channel going through same, preferably parallel to the axis of the rod which is open on one side towards the amplifier chamber and closed on the other side by means of a pressure control valve which, in a non claimed embodiment, is a pressure limiting valve. In this case, the guide bushing comprises a reduced diameter in an intermediate area of the length thereof configuring a step-like limiting stop, wherein the end contacting the casing is the end having a smaller diameter, for which the floating piston also incorporates in the inner diameter a step-like projection, the shape of which is, however, inverted with respect to the step formed by the limiting stop of the guide bushing, such that the two steps are complementary, i.e., the side of the floating piston closer to the casing has an inner diameter greater than the side closer to the piston. The sliding of the floating piston along the guide bushing is therefore limited to a specific length marked by the limiting stop.

Alternatively, the floating piston has no channel going through same, rather the casing is what comprises a passageway which is closed with a pressure control valve which, according to the invention, is a pressure regulating valve which is activated when being subjected to a specific working pressure. In this case, the displacement of the floating piston is limited by the value of the pressure in the amplifier chamber, which will stop increasing when the pressure regulating valve is activated when the working pressure is reached.

Depending on whether the movement is an extension movement or compression movement, the pressure in the traction chamber or compression chamber, respectively, is transmitted to the other side of the piston, causing deformation of the primary valve, for the passage of fluid. This pressure is also transmitted through the channel and the narrow conduit, also causing an increase in volume of the amplifier chamber, pushing the floating piston which in turn pushes the elastic element and the latter the secondary valve, which is coupled with the primary valve, limiting the deformation thereof by the direct pressure of the fluid.

However, the push of the floating piston, and therefore of the elastic element, on the secondary valve, which in turn acts on the primary valve, is limited, because, due to the limiting stop or the pressure regulating valve, according to the configuration of the frequency amplifier, the displacement of the floating piston is limited, as has been described. Likewise, since the displacement of the floating piston is limited, in the case of there being a limiting stop, an additional increase in pressure through the channel translates into an increase in pressure in the amplifier chamber. However, this pressure cannot increase indefinitely, given that the components of the amplifier may not be able to withstand the mechanical stress. To prevent this indefinite increase in pressure, the pressure in the amplifier chamber is limited by a non claimed pressure limiting valve in the case of using the limiting stop, so as to create a mechanical limitation for limiting the displacement of the floating piston, or, according to the invention, by a pressure regulating valve, so as to create a hydraulic regulation for regulating the pressure in the amplifier chamber which, in any of the two cases, opens up, allowing fluid to exit to the chamber in which the frequency amplifier is arranged, i.e., either the compression chamber or the traction chamber, when a specific pressure is reached.

One of the problems indicated in the prior art documents is thereby solved. In document WO2017112978, considered as the closest state of the art, there is no element which limits the displacement of the frequency chamber, which causes a degradation of the speed-dependent damping characteristic, thereby causing reduced comfort. Since document WO2017112978 does not impose any limitation to the displacement of the frequency chamber, low damping at medium and high speeds for maximising comfort is very difficult to achieve, since the gain applied by the frequency system will continue to increase in an unlimited manner with the increase in pressures associated with the increase in speed.

Likewise, as a result of the pressure control valves controlling the pressure inside the frequency amplifier, the present invention successfully protects the elements of the shock absorber. This does not occur in the invention described in WO2017112978, which does not ensure the integrity of the components thereof.

Moreover, the invention shown in patent document US-9534653_B2 may look visually similar to the invention when it incorporates the frequency amplifier with the pressure regulating valve. However, the functionality is completely different. In the case of patent US-9534653_B2, it has the function of limiting the maximum pressure inside the chamber (401), whereas the function of the pressure regulating valve, in addition to the latter, is to control the force on the main valves, which does not occur in US-9534653_2, so the function of this pressure regulating valve is to control damping in the entire range of speeds.

Moreover, the degree of fluid passage throttling offered by the primary valve can be configured by means of a series of elements including, among others, the elastic element, through its elasticity coefficient, outer diameter, and number of washers configuring it, the secondary valve, in terms of elasticity and size, which can be made up of one or more discs, the spacer located between the primary valve and secondary valve, in terms of outer diameter and thickness, the location of the limiting stop along the length of the guide bushing, which will define the maximum position of the floating piston on the rest of the components, as well as the working value of the pressure regulating valve, or of course by means of several of the preceding elements at the same time.

The frequency amplifier can be located in the traction chamber, in the compression chamber, or in both. Furthermore, it can also be located in the support valve in direct contact with the reserve chamber.

### BRIEF DESCRIPTION OF THE FIGURES

To complete the description of the invention, and for the purpose of helping to make the features thereof more readily understandable, according to a preferred exemplary embodiment thereof, a set of drawings is included where, by way of illustration and not limitation, the following figures have been represented:
- Figure 1 depicts a longitudinal section view of the shock absorber of the invention in a twin-tube version for extension movements.
- Figure 2 depicts a longitudinal section view of the shock absorber of the invention in a twin-tube version for compression and extension movements in a first embodiment.
- Figure 3 depicts a longitudinal section view of the shock absorber of the invention in a twin-tube version for compression and extension movements in a second embodiment.
- Figure 4 depicts a longitudinal section view of the shock absorber of the invention in a monotube version only for extension movements.
- Figure 5 depicts a longitudinal section view of the shock absorber of the invention in a monotube version for compression and extension movements.
- Figure 6 depicts a longitudinal section view of the detail of the area of the piston of the shock absorber of Figure 1 in a standby situation according to a non claimed embodiment.
- Figure 7 depicts a view of the shock absorber of Figure 6 in a second embodiment in which the valves are located in a sliding configuration with respect to the guide bushing instead of being embedded therein.
- Figure 8 depicts a view of the shock absorber of Figure 6 starting the low-frequency extension movement with the primary valve and secondary valve still uncoupled.
- Figure 9 depicts a view of the shock absorber of Figure 8 with the valves already coupled.
- Figure 10 depicts a view of the shock absorber of Figure 9, showing the feedback limitation with the limiting stop and releasing pressure by means of opening the non claimed pressure limiting valve.
- Figure 11 depicts a view of the shock absorber of Figure 8 after the extension movement ends, when the system starts the return travel to its standby position.
- Figure 12 depicts a view of the shock absorber of Figure 8 in a high-frequency extension movement.
- Figure 13 depicts a view of the shock absorber of Figure 9, showing the feedback limitation in a second embodiment with a pressure regulating valve according to the invention.
- Figure 14 depicts a graph with the damping force depending on the oscillation speed of a shock absorber.
- Figure 15a depicts a graph with the variation of the damping force depending on the stroke of the piston not incorporating any frequency adjustment device.
- Figure 15b depicts a graph with the variation of the damping force depending on the stroke of the piston incorporating a frequency adjustment device.
- Figure 16 depicts how the regulation of the shock absorber varies due to the feedback when it is not limited.

A list of the references used in the figures is provided below:
- 1.: Rod.
- 2.: Pin of the rod.
- 3.: Retainer.
- 4.: Guide.
- 5.: Outer tube.
- 6.: Inner tube.
- 7.: Reserve chamber.
- 8.: Traction chamber.
- 9.: Compression chamber.
- 10.: Piston.
- 11.: Lower cover.
- 12.: Gas.
- 13.: Fluid.
- 14.: Fluid level.
- 15.: Check valve.
- 16.: Valve support.
- 17.: Compression valve.
- 18.: Casing.
- 19.: Floating piston.
- 20.: Pressure limiting valve.
- 21.: Guide bushing.
- 22.: Channel.
- 23.: Primary valve.
- 24.: Secondary valve.
- 25.: Elastic element.
- 26.: Narrow conduit.
- 27.: Outflow channel.
- 27a.: First permanent opening.
- 28.: Frequency amplifier.
- 29.: Amplifier chamber.
- 30.: Limiting stop.
- 31.: Extension through hole.
- 32.: Compression through hole.
- 33.: Relief disc.
- 34.: Spacer.
- 35.: Sealing element.
- 36.: Pressure regulating valve.
- 37.: Passageway.
- 37a.: Second permanent opening.

### DESCRIPTION OF A PREFERRED EMBODIMENT OF THE INVENTION

As indicated, the present invention as set out in the appended set of claims relates to a shock absorber capable of regulating the load generated by a speed and frequency-dependent hydraulic device to which it is subjected simultaneously.

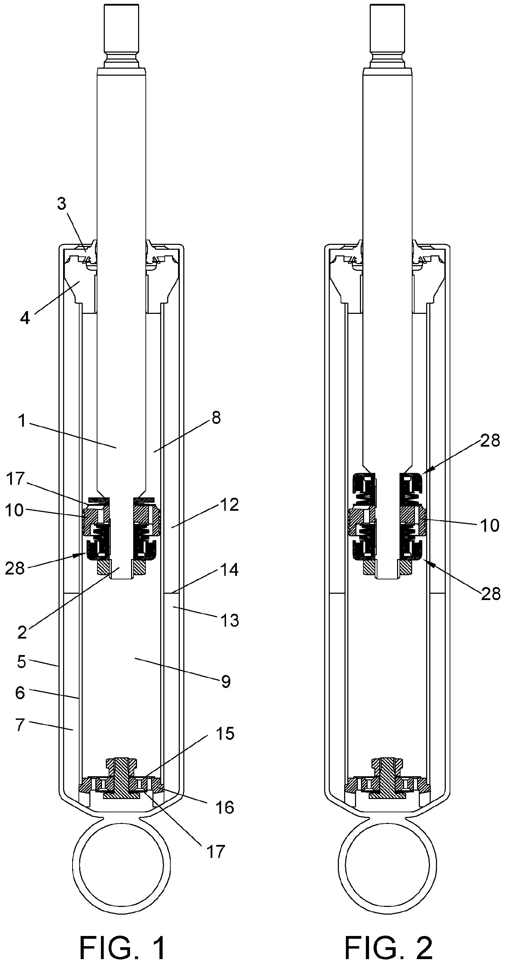

Figures 1 to 5 depict various embodiments of the shock absorber of the invention depending on whether they are intended to work only during the extension stroke or during the compression and extension strokes, in twin-tube and monotube shock absorbers.

Figure 1 depicts a longitudinal section of a twin-tube shock absorber according to the invention, capable of regulating the load only during the extension stroke.

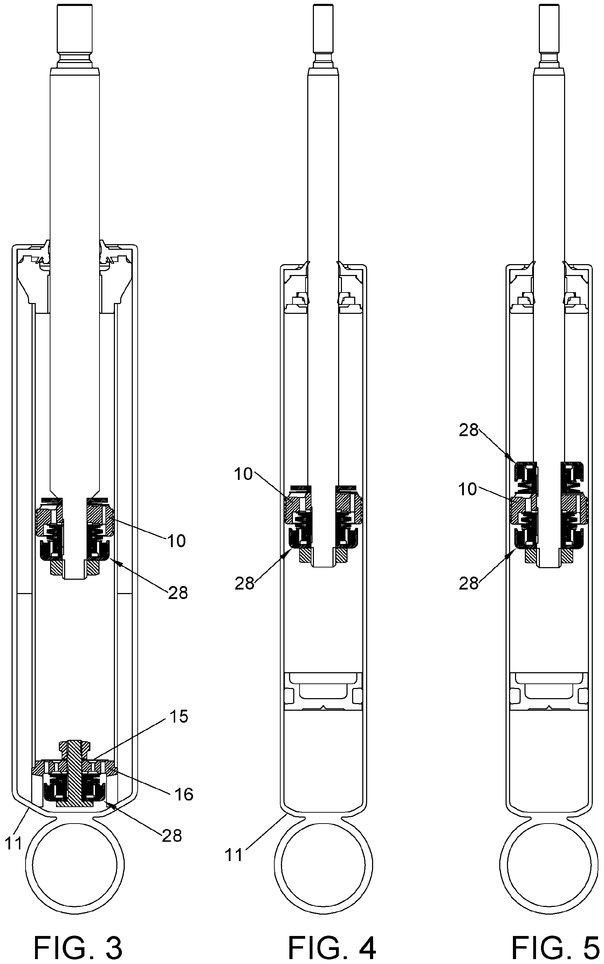

Figures 2 and 3 depict a longitudinal section of a twin-tube shock absorber according to the invention, capable of regulating the load during compression and extension movements in two different embodiments.

Figure 4 depicts a longitudinal section of a monotube shock absorber according to the invention, capable of regulating the load only during the extension stroke.

Figure 5 depicts a longitudinal section of a monotube shock absorber according to the invention, capable of regulating the load during compression and extension strokes.

Before explaining the operation of the shock absorber of the invention, the shock absorber will be described to enable understanding each of its components, how they are positioned, and how they are related to one another. The shock absorber that will be described is indiscriminately a monotube or twin-tube shock absorber for extension movement. The operation is can be readily deduced from this description for cases in which the shock absorber works only for the compression movement, for which reason it has not even been mentioned in the figures, or for both.

Once the components of the shock absorber and its way of working have been understood, Figures 1 to 5 will be described briefly below.

Therefore, the shock absorber of the invention can be based on a twin-tube shock absorber, without the extension to a monotube shock absorber, such as those known in the state of the art, formed by an outer tube (5) closed at one of the ends thereof and with an opening at the other end for the passage of the rod (1), posing a problem. A retainer (3) is placed between the rod (1) and the end of the outer tube (5) to ensure the leaktightness in this opening.

There is arranged concentric with the outer tube (5) an inner tube (6) with an end firmly fixed to the closed end of the outer tube (5) and the other end of which incorporates a guide (4) for fixing to the outer tube (5) and for guiding the rod (1) in the longitudinal movement thereof. There is formed between the outer tube (5) and the inner tube (6) a space which is a reserve chamber (7) that will be filled with fluid (13) to a specific level (14) above which the reserve chamber (7) is filled with gas (12).

The closed end of the outer tube (5) is attached to an end of the inner tube (6) incorporating a valve support (16) with holes communicating the compression chamber (9) with the reserve chamber (7). Some holes are closed by means of a check valve (15) and other holes are closed by means of a compression valve (17), such that the corresponding valve (15, 17) opens depending on whether the movement is an extension movement or a compression movement, respectively.

One end of the rod (1) ends in a pin of the rod (2) where there is assembled a piston (10) sliding in a fitted manner along the inner tube (6) and incorporating extension through holes (31) and compression through hole (32) communicating the traction chamber (8) with the compression chamber (9). A second compression valve (17) which rests on the compression through holes (32) is located on the piston (10) on the side of the traction chamber (8).

The shock absorber of the invention comprises, in the pin of the rod (2), in addition to the piston (10), a primary valve (23), a secondary valve (24), and a frequency amplifier (28) comprising a main part of the components forming the invention.

The frequency amplifier (28) comprises, as main elements, a guide bushing (21), having a cylindrical configuration and surrounding the pin of the rod (2), a casing (18) also surrounding the pin of the rod (2), and a floating piston (19). The casing (18) has a cylindrical configuration, formed by means of a base and a wall concentric with the pin of the rod (2) and fixed thereto, creating a volume where other movable components are located. The pin of the rod (2) incorporates at least one inner channel (22) along the entire length stretching from the piston (10) at one end to the casing (18) at the other end. There is arranged in the space formed between the casing (18) and the guide bushing (21) the floating piston (19) capable of sliding along the guide bushing (21) and the wall of the casing (18) in a leak-tight manner, for which it uses a pair of sealing elements (35) such as, for example, O-rings, one for the inner diameter and another for the outer diameter. The floating piston (19) has a base with a stepped section which, together with the casing (18) and the guide bushing (21), determine an amplifier chamber (29), the volume of which can be varied as the floating piston (19) slides along the guide bushing (21).

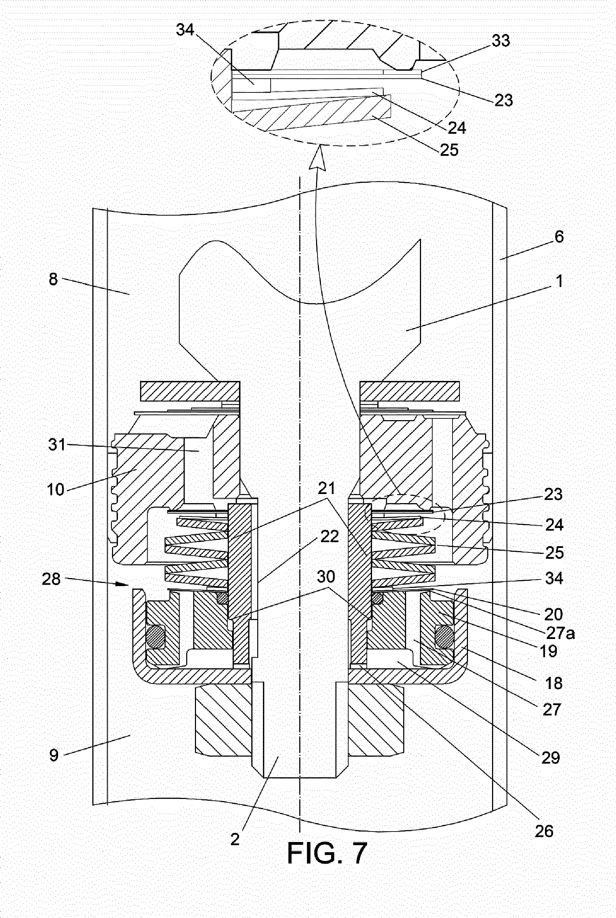

In a first embodiment of the frequency amplifier (28), the floating piston (19) comprises an outflow channel (27) which can be closed partially by means of a non claimed pressure limiting valve (20) which communicates the amplifier chamber (29) with the compression chamber (9), given that a first permanent opening (27a) always remains, as depicted in Figure 7. In turn, the guide bushing (21) has a reduced outer diameter in an intermediate area of its length configuring a step-like limiting stop (30), such that the floating piston (19) is capable of sliding between the base of the casing (18) and said limiting stop (30), acting by way of mechanical limitation for limiting the deformation force that may act on the elastic element (25). When the floating piston (19) reaches the limiting stop (30), the pressure in the amplifier chamber (29) will increase to a level at which the pressure limiting valve (20) is set, causing the opening thereof so that the pressure in the amplifier chamber (29) does not keep increasing.

In a second embodiment of the frequency amplifier (28), the casing (18) comprises a passageway (37) on which a pressure regulating valve (36) acts. This pressure regulating valve (36) opens when the pressure in the amplifier chamber (29) reaches a specific value, hydraulically regulating the maximum pressure in the amplifier chamber (29), and therefore the force applied by the elastic element (25) on the secondary valve (24). In any case, it has a second permanent opening (37a). This embodiment has the advantage with respect to the preceding one in that dimensional control associated with the assembly formed by the limiting stop (30) and the floating piston (19) is not required.

There is a substantial difference between these two embodiments. In the first embodiment, the pressure limiting valve (20) is set at a high level of pressure limit, only to prevent the components from breaking, without intervening in the load control of the system, which will be caused by the deformation imposed on the elastic element (25). In the second embodiment, without the limiting stop (30), the pressure regulating valve (36) performs the main function of regulating the force that the amplifier will exert on the primary valve (23). It is set at a very low pressure limit and determines the hydraulic function of the shock absorber.

In both embodiments, the primary valve (23) rests on the extension through holes (31), preferably by means of a relief disc (33) which establishes a permanent passage section for the fluid, and is embedded between the piston (10) and one of the ends of the guide bushing (21) in an additional embodiment. The other end of the guide bushing (21) rests on the casing (18) and has narrow conduits (26) at the end. An elastic element (25), going around the guide bushing (21) and extending until it contacts the secondary valve (24) at the other end, rests on the floating piston (19).

The guide bushing (21) surrounds part of a longitudinal surface channel (22) comprising the pin of the rod (2) whereby the traction chamber (8) is hydraulically communicated with the amplifier chamber (29). The narrow conduits (26) of the guide bushing (21) communicate the amplifier chamber (29) with the channel (22) of the pin of the rod (2), and finally, with the traction chamber (8). In one embodiment, the narrow conduits (26) are formed by means of a notched termination of the guide bushing (21). In an alternative embodiment, the end of the guide bushing (21) does not have narrow conduits (26), but rather rests on a second relief disc (33) which incorporates the communication conduits.

The primary valve (23) is located in contact with the piston (10), preferably through a relief disc (33). The secondary valve (24) is in turn located between two spacers (34), one separating it from the primary valve (23) and another spacing it apart from the elastic element (25), determining the rigidity of the secondary valve (24). The spacer (34) can be, for example, a washer. The primary valve (23) and secondary valve (24) are therefore separated by means of a spacer (34) leaving a space therebetween which can be configured depending on the thickness and outer diameter thereof.

As depicted in Figure 7, in a second embodiment, the primary valve (23) and the secondary valve (24), together with the relief disc (33) and the spacers (34), are located surrounding the guide bushing (21), on which they can slide, instead of being embedded.

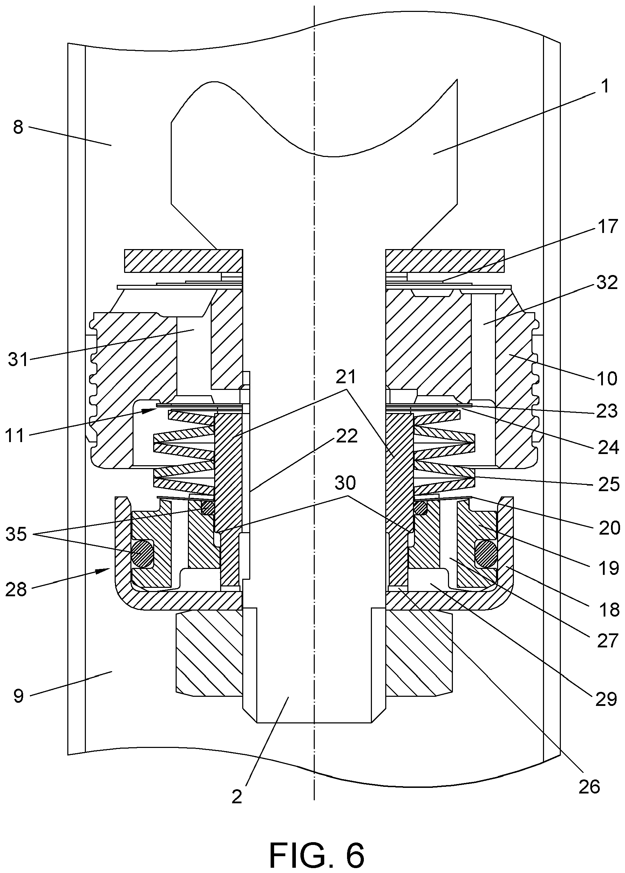

The operation of the shock absorber is as indicated below in reference to Figures 6 to 10, depicting the piston (10), the primary valve (23), the secondary valve (24), and the frequency amplifier (28) coupled in the pin of the rod (2), sliding along the inner tube (6) of the shock absorber in a sequential manner.

It must be taken into account that, to prevent loss of clarity and the introduction of excessive elements in the figures, the flow lines have been depicted only on one of the sides of the sections depicted in these figures, when in fact they would also be found on the other side.

Figures 6 and 7 depict a situation of the standby shock absorber in the two embodiments where the valves (23, 24) are located such that they are embedded between the piston (10) and one of the ends of the guide bushing (21) and surrounding the guide bushing (21), respectively.

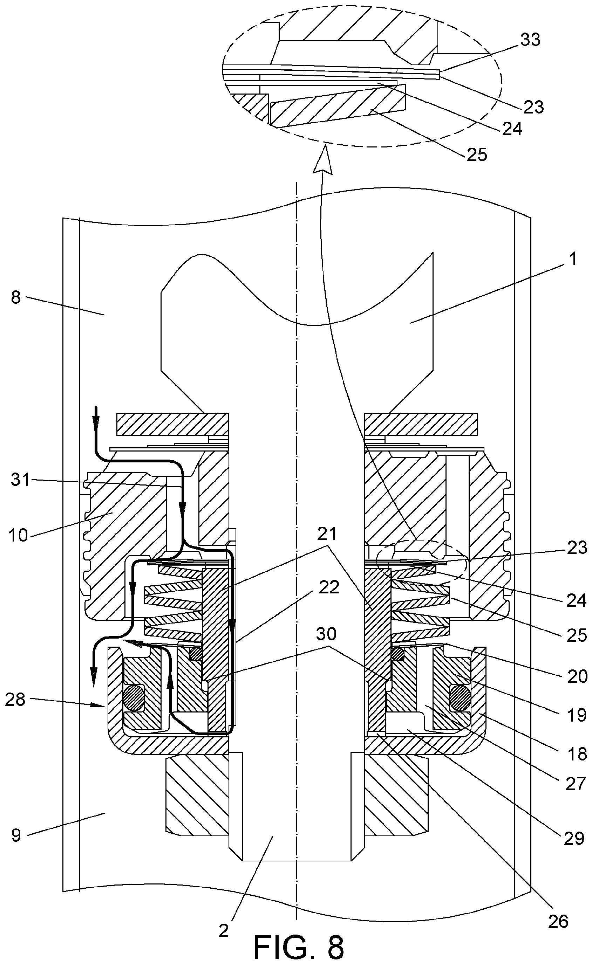

Once pressure is introduced in the traction chamber (8), as depicted in Figure 8, the primary valve (23) begins to bend such that it tends to contact a spacer (34) as it is separated from the secondary valve (24) by said spacer. This bending caused by the extension movements of the shock absorber generates fluid passage through two paths that operate in parallel. The primary passage is from the traction chamber (8) to the compression chamber (9) through the primary valve (23). The secondary passage channels the fluid located on the primary valve (23) through the longitudinal channel (22) and the narrow conduit (26) to the amplifier chamber (29). Once here, the amplifier allows part of the incoming fluid to move out towards the compression chamber (9) through the outflow channel (27) by means of the pressure limiting valve (20), which is non-hermetic, as it incorporates the first permanent opening (27a), and allows the fluid to move out towards the compression chamber (9) or through the pressure regulating valve (36), which is also non-hermetic, as it incorporates the second permanent opening (37a), according to the embodiment of the frequency amplifier (28). This configuration generates an increase in pressure in the traction chamber (8) with respect to the compression chamber (9) which is partially transmitted to the amplifier chamber (29). The excess pressure in the amplifier chamber (29) with respect to the compression chamber (9) is applied on the floating piston (19), causing it to slide, thereby pushing the elastic element (25) which in turn pushes the secondary valve (24). The existence of a spacer (34) between the primary valve (23) and the secondary valve (24) means that the sliding of the floating piston (19) is not immediately transferred to the primary valve (23).

The extensions of the shock absorber which are performed at low frequency provide sufficient time for the secondary valve (24) to come into contact with the primary valve (23).

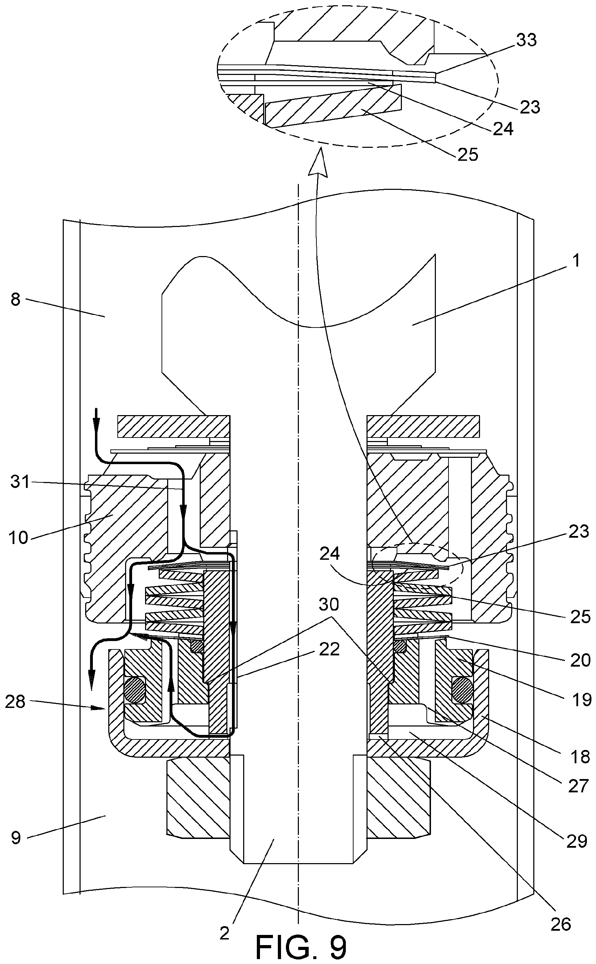

A subsequent situation is depicted in Figure 9 which shows how the displacement of the floating piston (19), which pushes the elastic element (25) and the secondary valve (24), is now sufficient to achieve contact between the partially open primary valve (23) and the secondary valve (24). With this configuration, the force exerted by the excess pressure in the amplifier chamber (29) is transferred to the primary valve (23), causing the fluid passage between the traction chamber (8) and the compression chamber (9) to be throttled to a greater extent. The greater pressure difference is transferred to the amplifier chamber (29), increasing the flow entering the chamber, which again increases the throttling exerted by the primary valve (23) on the fluid passage. This feedback phenomenon increases the pressure difference established between the traction chamber (8) and the compression chamber (9), and therefore the force for resisting against the extension movement generated by the shock absorber. It can be understood that the existence of the secondary valve (24) is of utmost importance, because, in its absence, the feedback cycle is triggered from the very beginning of the extension movement of the shock absorber, greatly hindering the frequency control of the force it provides. In other words, it is very difficult to achieve different shock absorber responses for a movement of 1 Hz with respect to another movement of 10 Hz, given that the process would be very fast.

If the frequency of the movement is low enough and/or the extension speed is high enough to transfer the required volume of fluid to the amplifier chamber (29), the floating piston (19) slides, considering the first embodiment of the frequency amplifier (28), until it contacts the limiting stop (30), as shown in Figure 9, or until the amplifier chamber (29) reaches the regulation pressure established by the pressure regulating valve (36). In this instant, the feedback phenomenon is limited, preventing additional force from being transferred from the frequency amplifier (28) to the primary valve (23). Said limit to the transferred force is essential both for ensuring structural integrity and for respecting the main function of the shock absorber shown in Figure 14, expressed as a curve of damping force as a function of oscillation speed. As mentioned, the only function of the pressure limiting valve (20) is to protect the components of the system, with the maximum deformation allowed by the limiting stop (30) on the elastic element (25) being determined by the force-speed curve, thereby being limited. However, in the case of the pressure regulating valve (36), it does indeed perform both functions of ensuring the structural integrity of the components of the system and reproducing the force-speed curve without limitation.

The feedback is configured to not reach its limit at a low speed, such that the high damping values required for this operating regimen can be enhanced by the frequency amplifier (28). In the case of the pressure limiting valve (20), limitation is used for medium and particularly high operating speeds of the shock absorber, although it is not strictly necessary in the case of the pressure regulating valve (36), the opening at a low speed of which might be of interest. In the case of the pressure regulating valve (36), the opening thereof can be configured for low-speed movements because, in addition to limiting the maximum feedback force, it also manages the shock absorber response in the entire operating range thereof. This management of the pressure regulating valve (36) is achieved by providing it with a configuration similar to that of the primary valve (23), which is perfectly adapted for generating the optimal damping level for each speed. Therefore, given that the frequency amplifier (28) can be configured to provide most of the fluid throttling in the primary valve (23), its limitation allows the high degree of damping required at a low speed to provide stability to the vehicle to be combined with a low damping coefficient at a high speed capable of minimising the transfer of terrain irregularities to the cabin, which in turn maximises comfort. Therefore, the invention acts both in the frequency domain and in the field of speed.

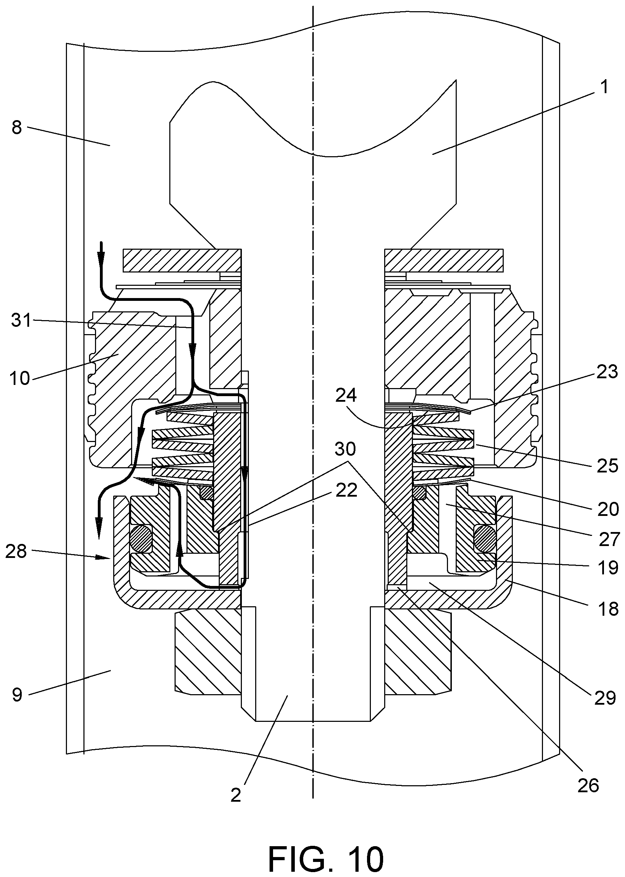

Considering the first embodiment of the frequency amplifier (28), once the floating piston (19) reaches the limiting stop (30), the volume of the amplifier chamber (29) is fixed, without the possibility of it increasing. If the extension cycle of the shock absorber persists under suitable conditions, the pressure in the amplifier chamber (29) increases, approaching the pressure of the traction chamber (8). The presence of the permanent openings (27a, 37a) prevents both pressures from levelling off completely, by ensuring a minimum outflow rate through the frequency amplifier (28). This pressure limitation may be insufficient for high-speed movements, for which reason a pressure limiting valve (20) must be included. As shown in Figure 10, since it subjected to differential pressure between the amplifier chamber (29) and the compression chamber (9) by means of the outflow channels (27), said pressure limiting valve (20) ends up opening for a pre-established value of the mentioned pressure difference, allowing more fluid to exit the amplifier chamber (29) towards the compression chamber (9). The components of the frequency amplifier (28) are therefore protected from excess pressures in the amplifier chamber (29), thereby ensuring their resistance and durability with respect to a wide range of speeds in the movement of the shock absorber. This also occurs when considering the second embodiment of the frequency amplifier (28) with the pressure regulating valve (36) which, through the damping regulating function thereof, exerts the same effect.

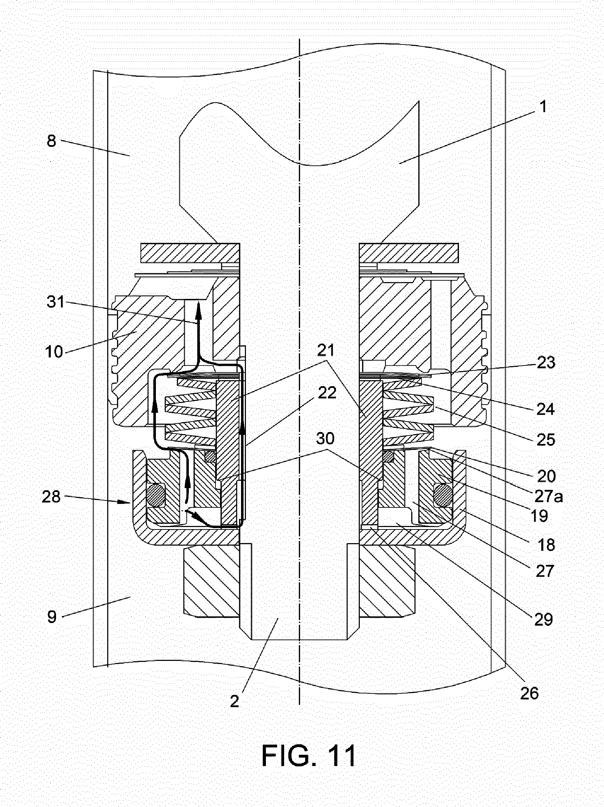

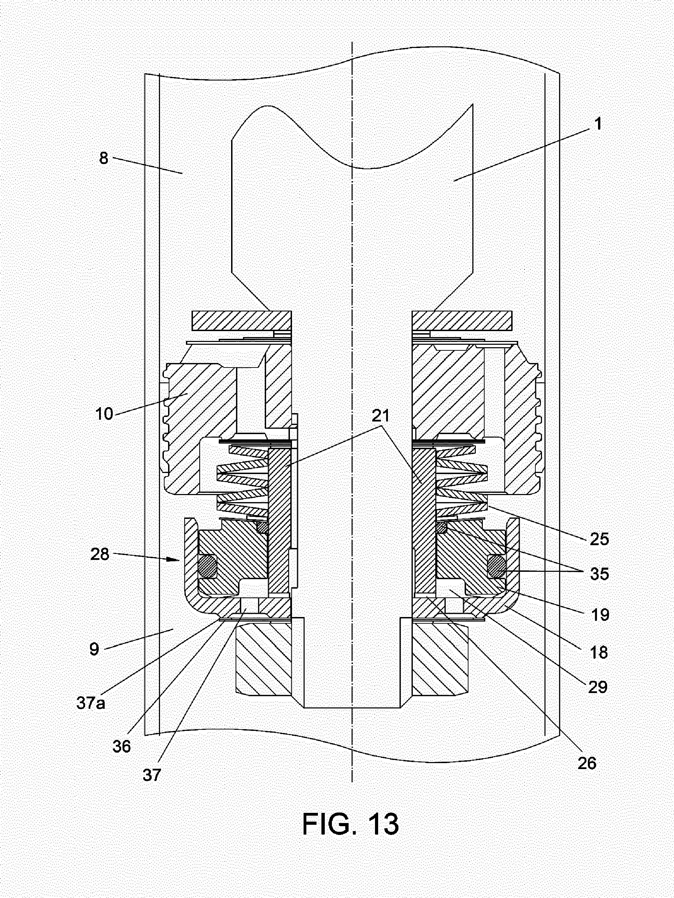

As the extension movement of the shock absorber comes to an end, the speed thereof decreases, the flow rate going through the primary valve (23) being reduced. This entails a reduction in the pressure difference between the traction chamber (8) and the compression chamber (9) which is in turn associated with a pressure reduction in the amplifier chamber (29). To that end, the direction of circulation of the fluid is reversed in the narrow conduit (26), exiting the amplifier chamber (29) towards the traction chamber (8). This is illustrated in Figure 11, with the fluid exiting the amplifier chamber (29) both through the narrow conduit (26) and the outflow channel (27), through the first permanent opening (27a), or as depicted in Figure 13, through the second permanent opening (37a). The outflow channel (27) and the pressure regulating valve (36) are the main fluid exit pathways in the final phase of the extension movement, in the two embodiments of the frequency amplifier (28) due to the greater pressure difference between the amplifier chamber (29) and the compression chamber (9) than between the amplifier chamber (29) and the traction chamber (8). This is because during an extension movement, the pressure in the traction chamber (8) is always higher than the pressure in the compression chamber (9). As the shock absorber starts the compression phase, this relationship is reversed, with the greatest differential pressure being between the amplifier chamber (29) and the traction chamber (8), and turning the narrow channel (26) into the preferred pathway for emptying the amplifier chamber (29).

While filling the amplifier chamber (29), the fluid enters through the narrow conduit (26) and exits through the permanent openings (27a, 37a), such that the effective fill section, which is the fundamental element for regulating how quickly the floating piston (19) slides, is the subtraction of both. Each of the sections can therefore have a greater dimension, given that it is the difference between them, which must be a small section, which controls the frequency behaviour of the frequency amplifier (28). This means a simpler and more robust manufacture of the control channels associated with the greater dimension thereof in comparison with the solutions existing in the state of the art. Additionally, the simultaneous operation thereof to allow the fluid to exit the amplifier chamber (29) during the final phase of the extension movement and during the entire compression stroke means that it is a large passage section, i.e., the sum of both, which ensures a quick return of the floating piston (19) to the standby position thereof. The duration of this movement until the recovery of the standby position must be the shortest possible, such that the system is always ready for performing high-frequency regulation, where the cycle is very quick. This construction is advantageous due to its ease of implementation and allows the invention to have operating frequencies that are much higher than those it must regulate.

When the extension movement occurs at a high frequency, the flow rate distribution is not altered with respect to the distribution developed with low-frequency movements shown in Figure 8: a primary flow is established between the traction chamber (8) and the compression chamber (9) through the primary valve (23). A second flow goes through the amplifier chamber (29), the fluid exiting from the upper part of the primary valve (23) to reach the amplifier chamber (29) by means of the channel (22) of the pin (2) and the narrow conduit (26). Part of the incoming fluid exits said chamber (29) to the compression chamber (9) through the outflow channel (27) through the first permanent opening (27a) or the second permanent opening (37a). Figure 10 shows this flow arrangement for a high-frequency cycle with the pressure limiting valve (20). The difference between both movements is the duration thereof, which is very short in the case of a high-frequency cycle. For the frequency amplifier (28) to start the feedback cycle, the floating piston (19) must be displaced in the direction for increasing the volume of the amplifier chamber (29). In fact, feedback is not triggered until the displacement of the floating piston (19) is sufficient for the secondary valve (24) to contact the primary valve (23), which are separated by the spacer (34). The pressure required to achieve that displacement of the floating piston (19) depends on the thickness and diameter of the spacer (34), the rigidity of the secondary valve (24), and the rigidity of the elastic element (25). In turn, the volume of fluid that must enter the amplifier chamber (29) to allow that minimum displacement of the floating piston (19) depends on the cross-section of the mentioned chamber. Finally, the time required for completing this filling depends on the pressure difference established between the traction chamber (8), the compression chamber (9), and the amplifier chamber (29), as well as the restrictions imposed on the entry of fluid through the narrow conduit (26) and on the exit through the permanent openings (27a, 37a).

The permanent openings (27a, 37a) allow the amplifier chamber (29) to be filled much more slowly than emptying same.

To perform frequency regulation of the damping, the amplifier chamber (29) must be filled slowly and emptied relatively quickly, allowing the system to be ready for a new cycle.

In the case of an extension movement, the pressure difference between the traction chamber and the compression chamber is high, so the current systems use a small access section to the frequency chamber which allows filling said chamber slowly. However, by using a small filling section, the emptying of the frequency chamber is hindered. The emptying of the frequency chamber occurs as a result of the higher pressure of the frequency chamber with respect to the traction chamber; however, this pressure difference is less than that which fills the frequency chamber during the extension phase, for which reason emptying is slower than filling. If the system does not empty completely before starting the next high-frequency cycle, the regulator loses efficiency.

In the system of the present invention, the incorporation of a permanent opening (27a, 37a) for controlled fluid exit in the amplifier chamber (29) allows larger sections to be used, since said controlled fluid exit hinders the filling of the chamber (29). The chamber (29) is therefore filled slowly and emptied quickly, which allows having the system ready for a new cycle without the effectiveness thereof being affected.

Since the duration of high-frequency movements is short, the volume of fluid transferred to the amplifier chamber (29) may be insufficient for the sliding of the floating piston (19) to cause the secondary valve (24) to contact the primary valve (23). In such a case, there is no feedback and the loads of the shock absorber are determined by the configuration of the extension through hole (31) and the primary valve (23). If the amplitude of the movement or the speed thereof is greater, the volume of fluid transferred to the amplifier chamber (29) will be higher, where the feedback process may even be started, as shown in detail in Figure 9. The configurable parameters of the invention, mentioned in the preceding paragraph, are selected so that there is not enough time for the feedback process to reach its limit with movements at a frequency higher than a pre-established one. The force generated by the shock absorber against high-frequency movements is therefore less than that associated with low-frequency movements in either case.

The primary valve (23) can be configured with a low pre-deformation and a low rigidity to minimise the force for resisting against the movement generated by the shock absorber at a high frequency. Therefore, by minimising the transmission of road irregularities typically associated with high oscillation frequencies, comfort is maximised.

Another factor conditioning the speed at which pressure increases is the volume of the chamber (29) itself or the combination of the rigidity of the secondary valve (24) and of the elastic element (25). The rigidity of the elastic element (25) and of the secondary valve (24) allows configuring the degree of coupling between the primary valve (23) and the secondary valve (24). Likewise, together with the distance established by the spacer (34) between the primary valve (23) and the secondary valve (24), the system is provided with a highly versatile configuration.

For a low-frequency movement of 1 Hz, for example, the system can be configured so that the displacement of the floating piston (19) reaches the limiting stop (30). This point establishes a stroke limit for the floating piston (19), such that the maximum force transferred by the amplifier (28) to the primary valve (23), through the elastic element (25) and the secondary valve (24), is limited. In other words, regardless of how long the duration of the movement is or how great the magnitude of the pressure applied to the primary valve (23) is, the maximum force gain provided by the frequency amplifier (28) is limited, since the feedback cycle is interrupted by the limiting stop (30). This allows applying significant gains at a low speed, given that they are limited at a high speed.

Subsequently, as depicted in Figure 10, the traction chamber (8) has exceeded a specific level of pressure. The floating piston (19) has already contacted the limiting stop (30) and cannot be displaced any longer, for which reason the amplifier chamber (29) can no longer increase in volume and pressure, leading the fluid located in the outflow channel (27) to cause the opening of the pressure limiting valve (20) such that the increase in pressure is counteracted by the fluid exiting the amplifier chamber (29). This occurs in the first embodiment of the frequency amplifier (28). In the second embodiment shown in Figure 13, upon reaching the amplifier chamber (29) at the desired regulating pressure, the pressure regulating valve (36) opens, with the pressure being counteracted by the fluid exiting the amplifier chamber (29). For this reason, the force that both the elastic element (25) and the secondary valve (24) receive from the floating piston (19) is also limited, since the displacement is limited either mechanically by the limiting stop (30) or hydraulically by the limitation of the pressure exerted from the amplifier chamber (29) through the pressure regulating valve (36), and therefore the force they exert on the primary valve (23). As shown in Figure 10, this means that the primary valve (23) will bend even more due to the increase in pressure in the traction chamber (8) and to the limited force it receives from the secondary valve (24), as has been described. This thereby prevents overcoming the resistance of the parts involved in high pressure situations.

Once the instant of maximum pressure in the traction chamber (8) has been exceeded, the floating piston (19) starts the displacement towards the standby position. The duration of this movement must be the shortest possible, such that the system is always ready for performing high-frequency regulation, where the cycle is very quick. In this situation, Figure 11 depicts the fluid distribution flow during the period of emptying the amplifier chamber (29) wherein the invention has both the first permanent opening (27a) and the narrow conduit (26) for the fluid to exit the amplifier chamber (29).

As shown in Figure 8, while filling the amplifier chamber (29), the first permanent opening (27a) allows the fluid to exit towards the compression chamber (9), such that this flow rate is subtracted from the flow rate entering the amplifier chamber (29) through the narrow conduit (26) of the guide bushing (21).

However, while emptying the amplifier chamber (29), fluid outflows are established both by the permanent openings (27a, 37a) and by the narrow conduit (26) of the guide bushing (21) due, respectively, to the lower pressures generated by an increase in volume in the traction chamber (8) due to the displacement of the piston (10), causing the fluid flow from the amplifier chamber (29) towards the traction chamber (8) to occur, in addition to through the channel (22) of the pin of the rod (2), also through the compression channel (32) located in the piston (10), since the compression valve (17) will be open for the same reason. Therefore, unlike in the filling phase, in the emptying phase the fluid flow rates through both sections (26, 27) are added up to allow a quick emptying of the amplifier chamber (29) and a quick recovery of the standby position of the system.

This construction is advantageous due to its ease of implementation and allows the invention to have operating frequencies that are much higher than those it must regulate. Therefore, the fact that the shock absorber has two outlets for the fluid at the end of the extension cycle means that the frequency amplifier (28) returns to the standby position thereof very quickly. The speed of recovery of the amplifier chamber (29) depends on the sizing of the narrow conduit (26) and the assembly formed by the outflow channel (27) together with the design at the level of stresses of the pressure limiting valve (20) or the pressure regulating valve (36).

The description of Figures 10 and 13 clearly show the importance of the movement of the floating piston (19) being limited by means of the limiting stop (30) or the pressure regulating valve (36), respectively. Otherwise, if the pressure of the traction chamber (8), and therefore of the amplifier chamber (29), increases excessively, the movement of the floating piston (19) would not be limited and it would not stop pressing on the elastic element (25), this elastic element on the secondary valve (24), and this secondary valve on the primary valve (23), where it may not only cause the closure of the extension through hole (31), but also may damage some of the mentioned components due to the excessive mechanical stress to which they would be subjected. Moreover, due to the incorporation of either the limiting stop (30) or the pressure regulating valve (36) in the frequency amplifier (28), the amplifier chamber (29) cannot increase in volume, for which reason the pressure in this chamber (29) is limited by means of the incorporation of the pressure control valves (20, 36), configured for opening when a specific level of pressure is reached.

The situations described in the figures are considered valid for shock absorbers working at low frequencies. However, in a high-frequency situation, the time of the cycle is very short and the shock absorber has no time to send the fluid through a path that is rather long and requires too much time to complete, so the fluid does not have time to fill the amplifier chamber (29), and therefore displace the floating piston (19). This is the reason why the frequency amplifier does not work in high frequency.

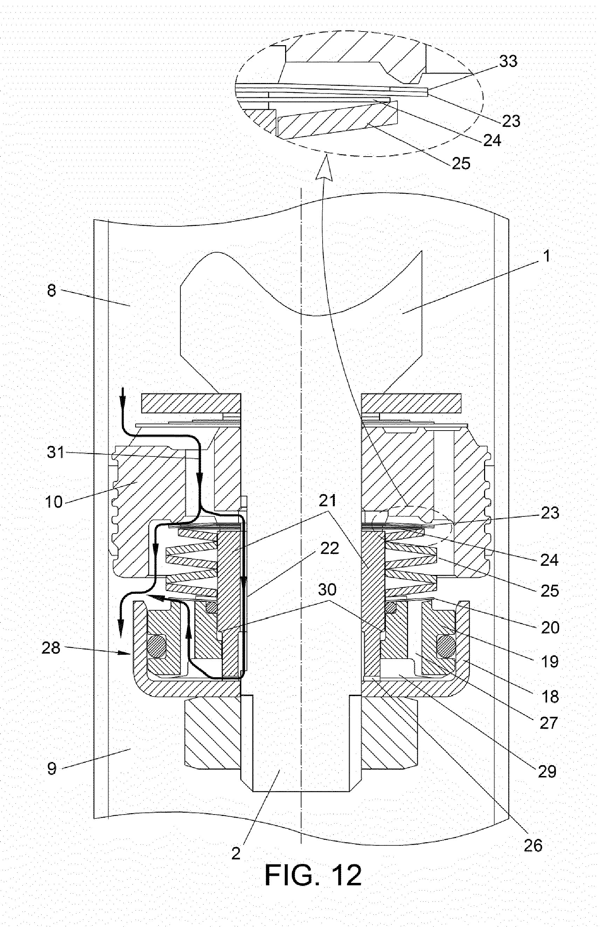

The way of working in a high-frequency extension cycle can be considered in Figure 12. In this situation, the primary valve (23) is responsible of providing the damping load. Part of the fluid will tend towards the amplifier chamber (29) through the channel (22), although it can be considered that the floating piston (19) will not be displaced for the most part due to the lack of reaction time, and the entire damping effect is carried out by means of the primary valve (23).

The separation between the primary valve (23) and the secondary valve (24) by means of the spacer (34), as well as the rigidity of said valves (23, 24), allow adjusting the load of the shock absorber depending on frequency.

With respect to Figures 1 to 5, once it is understood that the shock absorber of the invention is based on the incorporation of a frequency amplifier (28) with amplification limit and the primary valve (23) and secondary valve (24), the following can be stated:
- Figure 1 incorporates a frequency amplifier (28) attached to the piston (10) in the compression chamber (9), for which reason it is intended for working in extension.
- Figure 2 incorporates two frequency amplifiers (28), each located on one side of the piston (10), so they are intended for working in extension and in compression.
- Figure 3 incorporates two frequency amplifiers (28), one attached to the piston (10) in the compression chamber (9), for which reason it is intended for working in extension, and the other located in the valve support (16), intended for working in compression.
- Figure 4 incorporates a frequency amplifier (28) attached to the piston (10) in the compression chamber (9) of a monotube shock absorber for which reason, like in Figure 1, it is intended for working in extension.
- Figure 5 incorporates two frequency amplifiers (28), each located on one side of the piston (10) in a monotube shock absorber, so, like in Figure 1, they are intended for working in extension and in compression.

Shock absorbers with a single frequency amplifier (28) attached to the piston (10) in the traction chamber (8) for compression movements have not been depicted because the reasoning is the same as that described when it is located in the compression chamber (9).

In the case depicted in Figure 3 in which the frequency amplifier (28) for the compression movement is located in the valve support (16) with direct access to the reserve chamber (7), the operation is the same as the case in which the frequency amplifier (28) is positioned such that it is attached to the piston (10) in the traction chamber (8).

The invention therefore comprises two valves, a primary valve (23) and a secondary valve (24), supported in an elastic element (25), with a partial and configurable coupling level, and a hydraulic-mechanical amplification step which is carried out by means of the rest of the components of the frequency amplifier (28).

The primary valve (23) is the same as those used in the state of the art for a conventional shock absorber. Optionally, it can incorporate a controlled permanent outflow and has a rigidity and deformation that can be configured beforehand to obtain the desired damping characteristic. In the figures, the primary valve (23) is depicted attached to a relief disc (33) contacting the piston (10) and establishing a level of controlled outflow. The primary valve (23) is responsible for defining the damping characteristic at high frequencies.

The secondary valve (24), in combination with the elastic element (25), is responsible for defining the damping characteristic at low frequencies. The elastic element (25), in a preferred representation, is a stack of disc washers configuring a spring, also referred to as Belleville or disc spring, as it provides great configuration versatility. First, it provides a relationship between load, stroke, and compactness which is not possible with helical compression springs or with those known as wave springs. Second, the rigidity thereof is reduced as it is compressed, which allows combining high damping levels at a low speed with low damping levels at a high speed, providing the invention with the capacity to simultaneously regulate the frequency and speed behaviours in the manner that is the most advantageous for the vehicle. That is key for improving ride comfort, enhancing the frequency regulation effect.

The coupling of the primary valve (23) and secondary valve (24) can furthermore be configured with the size and characteristics of the two valves (23, 24) by choosing, for example, the outer diameter of the secondary valve (24), such that the bending of the primary valve (23) with respect to same is made possible once the maximum stroke of the floating piston (19) is reached. This contributes to minimising the increase in damping at a high speed.

The coupling can also be configured by means of the thickness or the diameter of the spacer (34), which will cause the effort the secondary valve (24) has to make in order to contact the primary valve (23) to be variable.

The coupling can also be configured by playing with the flexibility of the secondary valve (24) and the elastic element (25), given that the two elements are flexible. Therefore, when choosing a very rigid secondary valve (24) and a very flexible elastic element (25), greater displacement of the floating piston (19) to transfer the force from the amplifier (28) to the primary valve (23) will be required. The opposite configuration allows force transmission to occur for smaller displacements of the floating piston (19). These configuration possibilities provide the system with great versatility.

The coupling can also be configured by means of locating the limiting stop (30) along the length of the guide bushing (21), such that a location closer to the casing (18) implies a smaller maximum displacement of the floating piston (19), and therefore, the maximum deformation of the elastic element (25) will be smaller, whereby the secondary valve (24) will exert less maximum pressure on the primary valve (23). This allows reducing the maximum load of the shock absorber, which is that obtained for low-frequency movements.

The narrow conduit (26) and the first permanent opening (27a), which establish the restriction level at the fluid inlet and outlet of the amplifier chamber (29), respectively, can also be configured such that, if the difference in the passage sections thereof is small, the upward movement of the floating piston (19) is slow, whereas a large difference in passage sections allows quicker movements of the floating piston (19). This configuration allows adjusting the response of the system depending on the frequency of the movement applied to the shock absorber.

Finally, it must be taken into account that the present invention must not be limited by the embodiment described herein. Other configurations may be carried out by those skilled in the art based on the present description. Accordingly, the scope of the invention is defined by the following claims.

## Claims

1. A shock absorber with simultaneous speed and frequency-dependent hydraulic load regulation, comprising a rod (1) with an end ending in a pin of the rod (2) in which there is fixed a piston (10) separating a traction chamber (8) from a compression chamber (9) inside the shock absorber and comprising a through hole (31, 32) which allows communication between both chambers (8, 9), wherein the pin of the rod (2) comprises a longitudinal channel (22) and in wherein the shock absorber comprises:
- a primary valve (23) located in contact with the piston (10),
- a guide bushing (21), fixed to the pin of the rod (2), surrounding part of the channel (22), allowing the passage of fluid through the channel (22) between the two ends of the guide bushing (21) and placed between the piston (10) and a casing (18), allowing hydraulic communication between the channel (22) and an amplifier chamber (29),
- an elastic element (25) surrounding the guide bushing (21), the elastic element (25) being in contact with a floating piston (19), and
- a frequency amplifier (28) which in turn comprises:
- the casing (18), fixed to the pin of the rod (2), configured by means of a base and a wall concentric with the pin of the rod (2),
- the floating piston (19) capable of sliding between the guide bushing (21) and the wall of the casing (18), comprising a stepped base which, together with the guide bushing (21) and the casing (18), configures the amplifier chamber (29), and
- a pressure control valve (36), the shock absorber being **characterized in that:**
- the floating piston (19) has capacity to maintain leaktightness during sliding,
- a secondary valve (24) is located in contact with the primary valve (23), by means of a spacer (34), and with the elastic element (25),
- the pressure control valve (36) incorporates a permanent opening (37a) which allows the fluid to exit the amplifier chamber (29) and is configured to open when the amplifier chamber (29) reaches a specific level of pressure, allowing fluid to exit the amplifier chamber (29) at a higher flow rate,
such that the pressure of the amplifier chamber (29) acts on the floating piston (19), which is displaced pressing on the elastic element (25) which in turn acts on the secondary valve (24) and regulates the opening of the primary valve (23) until a specific level of pressure, controlled by the pressure control valve (36) that is in the form of a pressure regulating valve (36).

2. The shock absorber with simultaneous speed and frequency-dependent hydraulic load regulation according to claim 1, **characterised in that** the casing (18) comprises a passageway (37) partially closed by the pressure regulating valve (36) due to the existence of a second permanent opening (37a), and which opens when a specific pressure is reached in the amplifier chamber (29).

3. The shock absorber with simultaneous speed and frequency-dependent hydraulic load regulation according to claim 1, **characterised in that** the primary valve (23) and the secondary valve (24) are to be selected from valve embedded between the piston (10) and the guide bushing (21) and valve surrounding the guide bushing (21).

4. The shock absorber with simultaneous speed and frequency-dependent hydraulic load regulation according to claim 3, **characterised in that** the deformation of the primary valve (23) is defined by means of the configuration of an element to be selected from:
- the elastic element (25),
- the secondary valve (24),
- the spacer (34) located between the primary valve (23) and secondary valve (24),
- the location of the limiting stop (30) along the length of the guide bushing (21),
- the activation value of the pressure regulating valve (36), and
- a combination of the foregoing.

5. The shock absorber with simultaneous speed and frequency-dependent hydraulic load regulation according to claim 4 , **characterised in that** the guide bushing (21) is attached to the casing (18) by means of a configuration to be selected from the incorporation of a relief disc and a notched termination of the end of the guide bushing (21) where at least one narrow conduit (26) is configured.

6. The shock absorber with simultaneous speed and frequency-dependent hydraulic load regulation according to claim 4 4 , **characterised in that** the elastic element (25) is an assembly of disc springs that can be configured in terms of elasticity, outer diameter, and number.

7. The shock absorber with simultaneous speed and frequency-dependent hydraulic load regulation according to claim 2 , **characterised in that** the secondary valve (24) can be configured in terms of elasticity and size.

8. The shock absorber with simultaneous speed and frequency-dependent hydraulic load regulation according to claim 2, **characterised in that** the outer diameter of the secondary valve (24) is configured depending on the pressure desired on the primary valve (23).

9. The shock absorber with simultaneous speed and frequency-dependent hydraulic load regulation according to claim 4 , **characterised in that** the spacer (34) can be configured in terms of outer diameter and thickness.

10. The shock absorber with simultaneous speed and frequency-dependent hydraulic load regulation according to claim 1, **characterised in that** the frequency amplifier (28) is located in a position to be selected from the traction chamber (8), the compression chamber (9), and both.

11. The shock absorber with simultaneous speed and frequency-dependent hydraulic load regulation according to claim 1, **characterised in that** a second frequency amplifier (28) is located in the support valve (16) in direct contact with the reserve chamber (7).

## Patentansprüche

1. Stoßdämpfer mit gleichzeitiger geschwindigkeits- und frequenzabhängiger Hydrauliklastregelung, umfassend eine Stange (1) mit einem in einem Stift der Stange (2) endenden Ende, in dem ein eine Zugkammer (8) von einer Druckkammer (9) im Stoßdämpfer trennender und ein Durchgangsloch (31, 32), das eine Verbindung zwischen beiden Kammern (8, 9) ermöglicht, umfassender Kolben (10) befestigt ist, wobei der Stift der Stange (2) einen Längskanal (22) umfasst und wobei der Stoßdämpfer umfasst:
- ein in Kontakt mit dem Kolben (10) angeordnetes primäres Ventil (23),
- eine Führungsbuchse (21), befestigt am Stift der Stange (2), umgebend einen Teil des Kanals (22), ermöglichend das Strömen von Fluid durch den Kanal (22) zwischen den zwei Enden der Führungshülse (21) und angeordnet zwischen dem Kolben (10) und einem Gehäuse (18), ermöglichend eine Hydraulikverbindung zwischen dem Kanal (22) und einer Verstärkerkammer (29),
- ein die Führungshülse (21) umgebendes elastisches Element (25), wobei das elastische Element (25) in Kontakt mit einem Schwimmkolben (19) ist, und
- einen Frequenzverstärker (28), der wiederum umfasst:
- das am Stift der Stange (2) befestigte Gehäuse (18), ausgebildet durch eine Basis und eine zum Stift der Stange (2) konzentrische Wand,
- den zum Gleiten zwischen der Führungshülse (21) und der Wand des Gehäuses (18) fähigen Schwimmkolben (19), umfassend eine gestufte Basis, die zusammen mit der Führungshülse (21) und dem Gehäuse (18) die Verstärkerkammer (29) ausbildet, und
- ein Drucksteuerventil (36),
wobei der Stoßdämpfer **dadurch gekennzeichnet ist, dass:**
- der Schwimmkolben (19) die Fähigkeit aufweist, während des Gleitens die Dichtheit zu gewährleisten,
- ein sekundäres Ventil (24) in Kontakt mit dem primären Ventil (23) durch ein Distanzstück (34) und mit dem elastischen Element (25) angeordnet ist,
- das Drucksteuerventil (36) eine dauerhafte Öffnung (37a) aufweist, die es dem Fluid ermöglicht, die Verstärkerkammer (29) zu verlassen, und die zum Öffnen ausgebildet ist, wenn die Verstärkerkammer (29) einen bestimmten Druckpegel erreicht, was dem Fluid ermöglicht, die Verstärkerkammer (29) mit einer höheren Durchflussrate zu verlassen,
so dass der Druck der Verstärkerkammer (29) auf den Schwimmkolben (19) einwirkt, der unter Druck auf das elastische Element (25) verschoben wird, das wiederum auf das sekundäre Ventil (24) einwirkt und die Öffnung des primären Ventils (23) bis zu einem bestimmten Druckpegel regelt, gesteuert durch das Drucksteuerventil (36), das die Form eines Druckregelventils (36) aufweist.

2. Stoßdämpfer mit gleichzeitiger geschwindigkeits- und frequenzabhängiger Hydrauliklastregelung nach Anspruch 1, **dadurch gekennzeichnet, dass** das Gehäuse (18) einen durch das Druckregelventil (36) durch das Vorhandensein einer zweiten dauerhaften Öffnung (37a) teilweise geschlossenen Durchgang (37) umfasst, der öffnet, wenn ein bestimmter Druck in der Verstärkerkammer (29) erreicht ist.

3. Stoßdämpfer mit gleichzeitiger geschwindigkeits- und frequenzabhängiger Hydrauliklastregelung nach Anspruch 1, **dadurch gekennzeichnet, dass** das primäre Ventil (23) und das sekundäre Ventil (24) aus einem zwischen dem Kolben (10) und der Führungshülse (21) integrierten Ventil und einem die Führungshülse (21) umgebenden Ventil auszuwählen ist.

4. Stoßdämpfer mit gleichzeitiger geschwindigkeits- und frequenzabhängiger Hydrauliklastregelung nach Anspruch 3, **dadurch gekennzeichnet, dass** das Verformen des primären Ventils (23) durch die Konfiguration eines Elements definiert wird, das auszuwählen ist zwischen:
- dem elastischen Element (25),
- dem sekundären Ventil (24),
- dem zwischen dem primären Ventil (23) und sekundären Ventil (24) angeordneten Distanzstück (34),
- der Anordnung des Endanschlags (30) entlang der Länge der Führungshülse (21),
- dem Aktivierungswert des Druckregelventils (36), und
- einer Kombination der vorhergehenden Elemente.

5. Stoßdämpfer mit gleichzeitiger geschwindigkeits- und frequenzabhängiger Hydrauliklastregelung nach Anspruch 4, **dadurch gekennzeichnet, dass** die Führungshülse (21) am Gehäuse (18) durch eine aus der Integration einer Entlastungsscheibe und einem gekerbten Abschluss des Endes der Führungshülse (21) auszuwählende Konfiguration befestigt ist, wobei wenigstens eine schmale Leitung (26) ausgebildet ist.

6. Stoßdämpfer mit gleichzeitiger geschwindigkeits- und frequenzabhängiger Hydrauliklastregelung nach Anspruch 4, **dadurch gekennzeichnet, dass** das elastische Element (25) eine Baugruppe von Tellerfedern ist, die bezüglich Elastizität, Außendurchmesser und Zahl ausgebildet werden können.

7. Stoßdämpfer mit gleichzeitiger geschwindigkeits- und frequenzabhängiger Hydrauliklastregelung nach Anspruch 2, **dadurch gekennzeichnet, dass** das sekundäre Ventil (24) bezüglich Elastizität und Größe ausgebildet werden kann.

8. Stoßdämpfer mit gleichzeitiger geschwindigkeits- und frequenzabhängiger Hydrauliklastregelung nach Anspruch 2, **dadurch gekennzeichnet, dass** der Außendurchmesser des sekundären Ventils (24) abhängig vom am primären Ventil (23) gewünschten Druck ausgebildet ist.

9. Stoßdämpfer mit gleichzeitiger geschwindigkeits- und frequenzabhängiger Hydrauliklastregelung nach Anspruch 4, **dadurch gekennzeichnet, dass** das Distanzstück (34) bezüglich Außendurchmesser und Stärke ausgebildet werden kann.

10. Stoßdämpfer mit gleichzeitiger geschwindigkeits- und frequenzabhängiger Hydrauliklastregelung nach Anspruch 1, **dadurch gekennzeichnet, dass** der Frequenzverstärker (28) in einer von der Zugkammer (8), der Druckkammer (9) und beiden auszuwählenden Position angeordnet ist.

11. Stoßdämpfer mit gleichzeitiger geschwindigkeits- und frequenzabhängiger Hydrauliklastregelung nach Anspruch 1, **dadurch gekennzeichnet, dass** ein zweiter Frequenzverstärker (28) im Stützventil (16) in direktem Kontakt mit der Reservekammer (7) angeordnet ist.

## Revendications

1. Amortisseur à régulation de charge hydraulique simultanée en fonction de la vitesse et de la fréquence, comprenant une tige (1) ayant une extrémité se terminant dans une broche de la tige (2) dans laquelle est fixé un piston (10) séparant une chambre de traction (8) d'une chambre de compression (9) à l'intérieur de l'amortisseur et comprenant un trou traversant (31, 32) qui permet une communication entre les deux chambres (8, 9), dans lequel la broche de la tige (2) comprend un canal longitudinal (22) et dans lequel l'amortisseur comprend :
- un clapet primaire (23) situé en contact avec le piston (10),
- une douille de guidage (21), fixée à la broche de la tige (2), encerclant une partie du canal (22), permettant le passage de fluide à travers le canal (22) entre les deux extrémités de la douille de guidage (21) et placée entre le piston (10) et un logement (18), permettant une communication hydraulique entre le canal (22) et une chambre d'amplification (29),
- un élément élastique (25) encerclant la douille de guidage (21), l'élément élastique (25) étant en contact avec un piston flottant (19), et
- un amplificateur de fréquence (28) qui à son tour comprend :
- le logement (18), fixé à la broche de la tige (2), configuré au moyen d'une base et d'une paroi concentrique avec la broche de la tige (2),
- le piston flottant (19) capable de coulisser entre la douille de guidage (21) et la paroi du logement (18), comprenant une base étagée qui, conjointement avec la douille de guidage (21) et le logement (18), configure la chambre d'amplification (29), et
- un clapet de commande de pression (36),
l'amortisseur étant **caractérisé en ce que** :
- le piston flottant (19) possède la capacité de conserver son étanchéité au cours du coulissement,
- un clapet secondaire (24) est situé en contact avec le clapet primaire (23), au moyen d'une entretoise (34), et avec l'élément élastique (25),
- le clapet de commande de pression (36) incorpore une ouverture permanente (37a) qui permet au fluide de sortir de la chambre d'amplification (29) et est configuré pour s'ouvrir lorsque la chambre d'amplification (29) atteint un niveau de pression spécifique, permettant au fluide de sortir de la chambre d'amplification (29) à un débit plus élevé, de sorte que la pression de la chambre d'amplification (29) agisse sur le piston flottant (19), qui est déplacé en pressant sur l'élément élastique (25) qui à son tour agit sur le clapet secondaire (24) et régule l'ouverture du clapet primaire (23) jusqu'à un niveau de pression spécifique, commandé par le clapet de commande de pression (36) qui se présente sous la forme d'un clapet de régulation de pression (36).

2. Amortisseur à régulation de charge hydraulique simultanée en fonction de la vitesse et de la fréquence selon la revendication 1, **caractérisé en ce que** le logement (18) comprend un passage (37) partiellement fermé par le clapet de régulation de pression (36) en raison de l'existence d'une seconde ouverture permanente (37a), et qui s'ouvre lorsqu'une pression spécifique est atteinte dans la chambre d'amplification (29).

3. Amortisseur à régulation de charge hydraulique simultanée en fonction de la vitesse et de la fréquence selon la revendication 1, **caractérisé en ce que** le clapet primaire (23) et le clapet secondaire (24) sont à sélectionner parmi un clapet incorporé entre le piston (10) et la douille de guidage (21) et un clapet encerclant la douille de guidage (21).

4. Amortisseur à régulation de charge hydraulique simultanée en fonction de la vitesse et de la fréquence selon la revendication 3, **caractérisé en ce que** la déformation du clapet primaire (23) est définie au moyen de la configuration d'un élément à sélectionner parmi :
- l'élément élastique (25),
- le clapet secondaire (24),
- l'entretoise (34) située entre le clapet primaire (23) et le clapet secondaire (24),
- l'emplacement de la butée de limitation (30) le long de la longueur de la douille de guidage (21),
- la valeur d'activation du clapet de régulation de pression (36), et
- une combinaison de ce qui précède.

5. Amortisseur à régulation de charge hydraulique simultanée en fonction de la vitesse et de la fréquence selon la revendication 4, **caractérisé en ce que** la douille de guidage (21) est fixée au logement (18) au moyen d'une configuration à sélectionner parmi l'incorporation d'un disque de compensation et d'une terminaison à encoches de l'extrémité de la douille de guidage (21) où au moins un conduit étroit (26) est configuré.

6. Amortisseur à régulation de charge hydraulique simultanée en fonction de la vitesse et de la fréquence selon la revendication 4, **caractérisé en ce que** l'élément élastique (25) est un ensemble de ressorts à disques qui peuvent être configurés en termes d'élasticité, de diamètre externe et de nombre.

7. Amortisseur à régulation de charge hydraulique simultanée en fonction de la vitesse et de la fréquence selon la revendication 2, **caractérisé en ce que** le clapet secondaire (24) peut être configuré en termes d'élasticité et de taille.

8. Amortisseur à régulation de charge hydraulique simultanée en fonction de la vitesse et de la fréquence selon la revendication 2, **caractérisé en ce que** le diamètre externe du clapet secondaire (24) est configuré en fonction de la pression souhaitée sur le clapet primaire (23).

9. Amortisseur à régulation de charge hydraulique simultanée en fonction de la vitesse et de la fréquence selon la revendication 4, **caractérisé en ce que** l'entretoise (34) peut être configurée en termes de diamètre externe et d'épaisseur.

10. Amortisseur à régulation de charge hydraulique simultanée en fonction de la vitesse et de la fréquence selon la revendication 1, **caractérisé en ce que** l'amplificateur de fréquence (28) est situé à une position à sélectionner parmi la chambre de traction (8), la chambre de compression (9) et les deux.

11. Amortisseur à régulation de charge hydraulique simultanée en fonction de la vitesse et de la fréquence selon la revendication 1, **caractérisé en ce qu'**un second amplificateur de fréquence (28) est situé dans le clapet de support (16) en contact direct avec la chambre de réserve (7).
